# EUROPEAN PATENT APPLICATION

(11) **EP 4 786 150 A1**
(43) Date of publication of application: **05.08.2026**
(21) Application number: 25736231.9
(22) Date of filing: 06.01.2025
(51) Int. Cl.: B29C 65/00, B29C 65/02, B29C 65/24, B29C 53/04, H01M 50/105, H01M 50/183, H01M 10/052

(54) **POUCH-TYPE SECONDARY BATTERY, POUCH SEALING DEVICE, AND SEALING METHOD USING SAME**

(30) Priority: 05.01.2024 KR 20240002157
(71) Applicant: LG Energy Solution, Ltd., Seoul 07335 (KR)
(72) Inventor: JUNG, Woo Jung, Daejeon 34122 (KR)
(74) Representative: Goddar, Heinz J.
(86) International application number: PCT/KR2025/099005
(87) International publication number: WO 2025/147184

(57) **Abstract**

The present invention relates to a pouch-type secondary battery, a pouch sealing device, and a sealing method thereof, and more specifically, relates to a pouch-type secondary battery, a pouch sealing device, and a sealing method using the same, which can exclude a pouch drawing process and enhance durability.

According to one example of the present invention, a pouch-type secondary battery may be provided, which comprises: an electrode assembly in which an electrode lead is provided on at least one of one side surface and the other side surface; and a pouch arranged to surround the electrode assembly by folding a middle portion of a pouch film and thus covering the upper surface, lower surface, and back surface of the electrode assembly and provided with a sealing portion formed by heat-fusing border portions located on the front surface and both side surfaces of the electrode assembly; wherein the sealing portion comprises folding sealing portions located on one side surface and the other side surface of the electrode assembly, respectively, and heat-fused by folding a portion of the pouch film, and the folding sealing portions comprise a front folding sealing portion formed close to the front surface of the electrode assembly and a rear folding sealing portion formed close to the other side surface of the electrode assembly.

## Description

### Technical Field

The present invention relates to a pouch-type secondary battery, a pouch sealing device, and a sealing method thereof, and more specifically, relates to a pouch-type secondary battery, a pouch sealing device, and a sealing method using the same, which can exclude a pouch drawing process and enhance durability.

This application claims the benefit of priority based on Korean Patent Application No. 10-2024-0002157 dated January 5, 2024, and Korean Patent Application No. 10-2025-0001613 dated January 6, 2025, the disclosures of which are incorporated herein by reference in their entirety.

### Background Art

Rechargeable secondary batteries have been widely used as an energy source for wireless mobile devices. In addition, secondary batteries have also attracted attention as an energy source for electric transportation devices, hybrid electric transportation devices, and the like., which are proposed as a solution to air pollution from existing gasoline transportation devices, diesel transportation devices, and the like, using fossil fuels. In addition to this, the types of applications that use secondary batteries are very diverse due to the advantages of secondary batteries, and it is expected that secondary batteries will be applied to more fields and products in the future.

Depending on the shape of the battery case, the secondary battery is classified into cylindrical battery and rectangular batteries in which an electrode assembly is embedded into a cylindrical or rectangular metal can, and pouch-type batteries in which an electrode assembly is embedded into a pouch-type case of an aluminum laminate sheet, and the electrode assembly embedded into the battery case is a power generation element consisting of a structure of a positive electrode, a negative electrode, and a separator interposed between these positive and negative electrodes to be capable of charging and discharging, which is classified into a jelly-roll type wound by interposing a separator between long sheet-shaped positive and negative electrodes coated with active materials, and, and a stack type in which multiple positive and negative electrodes with a certain size are sequentially laminated in a state where a separator is interposed therebetween.

As a lithium secondary battery, a pouch-type battery cell in which an electrode assembly is sealed by a pouch, which is an aluminum sealing material, is widely used. The electrode assembly of the pouch-type battery cell is accommodated in a pouch case, which is a sealing material. The pouch type accommodates the electrode assembly in a pouch manufactured with a flexible polymer material having an irregular shape.

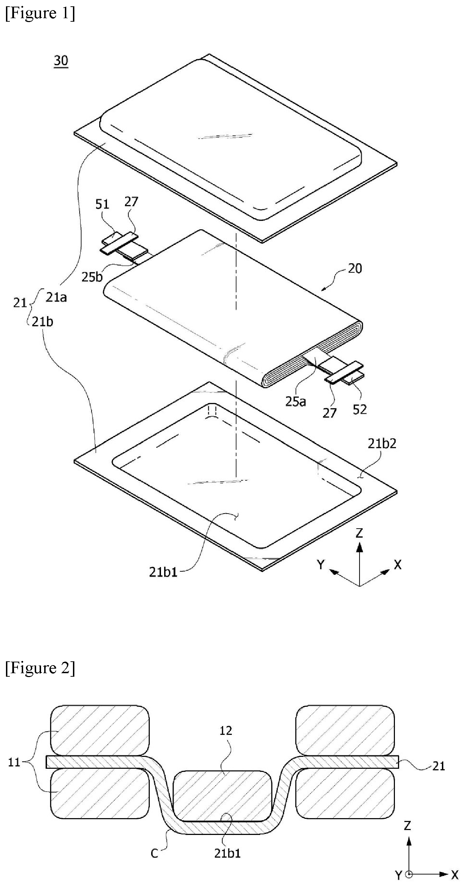

Figure 1 is an exploded perspective diagram schematically showing an appearance of constitutions of a typical pouch-type secondary battery.

Referring to Figure 1, the pouch (21), which is a case of a pouch-type battery cell (30), comprises pouch films (21a, 21b) having a flexible material. The pouch films (21a, 21b) are composed of a plurality of layers, such as an outer covering layer, a metal blocking layer, and an inner adhesive layer. A cup-shaped accommodation portion for accommodating an electrode assembly (20) may be formed in each of an upper pouch film (21a) and a lower pouch film (21b). The cup accommodation portion may be formed only in one of the upper pouch film and the lower pouch film, and in this case, the cup accommodation portion (21b1) may be formed only in the lower pouch film.

A pouch-type battery cell (30) comprises an electrode assembly (20) accommodated in the accommodation portion (21b1) of such a pouch (21). The electrode assembly (20) comprises an electrode (not shown) in which an electrode active material is applied to an electrode plate, and electrode tabs (25a, 25b) connected to the electrode. The electrode comprises a positive electrode and a negative electrode. The electrode assembly (20) comprises a separator interposed between such positive electrode and negative electrode. The electrode assembly (20) is formed with positive electrode tabs (25a) extending to one side of a plurality of positive electrodes and negative electrode tabs (25b) extending to one side of a plurality of negative electrodes.

The pouch-type battery cell (30) comprises an electrode lead (50). The electrode lead (50) is divided into a positive electrode lead (52) and a negative electrode lead (51) according to polar characters. The positive electrode lead (52) and the negative electrode lead (51) are pulled outward when the electrode assembly (20) is accommodated in the pouch case, thereby serving to form electrical connections with external terminals (not shown). Each of the positive electrode lead (52) and the negative electrode lead (51) is provided with a lead film (27) for electrical insulation of the portion in contact with the pouch (21).

Then, such an electrode assembly (20) is accommodated in an accommodation portion (21b1) formed in the lower pouch film (21b). An electrolyte is injected in a state where such an electrode assembly (20) is accommodated in the accommodation portion (21b1), and after performing initial charging and discharging (activation process), edge portions (21b2) of the upper pouch film (21a) and the lower pouch film (21b) are subjected to heat fusion and sealed in this order.

Meanwhile, Figure 1 illustrates an appearance that an upper pouch film (21a) and a lower pouch film (21b) are separated and combined. Alternatively, the upper pouch film and the lower pouch film may be a single pouch film, and folding of the pouch film may be performed on one of the four sides.

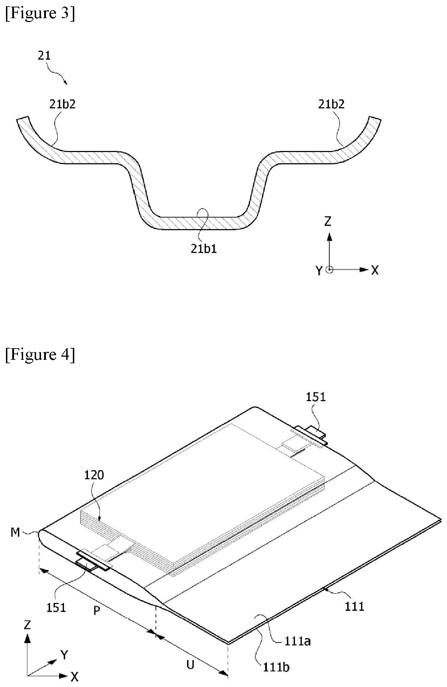

Figure 2 is a vertical cross-sectional diagram showing a forming process of a pouch forming device of a conventional art. Then, Figure 3 is a vertical cross-sectional diagram of a pouch film formed using a pouch forming device of a conventional art.

Conventionally, a pouch (21) was manufactured by forming a secondary battery accommodation portion (21b1) on a pouch film (21b) using a drawing forming method, accommodating an electrode assembly (20) in the secondary battery accommodation portion (21b1), and then sealing respective edge portions (21b2) of an upper pouch film (21a) and a lower pouch film (21b). The drawing forming method was performed through a process of fixing the pouch film (21b) to fixing members (11) and stretching the fixed pouch film (21b) with a punch member (12).

However, in the drawing forming process of a laminate sheet, when the fixing members (11) fix the edges of the pouch film (21b) and the punch member (12) pressurizes the center of the pouch film (21b) from the top to the bottom to form the secondary battery accommodation portion, a pressurizing force added to the pouch film is likely to be concentrated on a specific portion, for example, a corner portion of a cup shape, so that excessive stretching is likely to occur in the corner portion (C) of the secondary battery accommodation portion, and this problem is not recognized.

That is, the corner portion (C) of the secondary battery accommodation portion of the conventional art is a portion having severe shape deformation as structural bending upon shape process occurs, which may be vulnerable due to an extreme difference in stretching degrees between an outer surface and an inner surface.

Accordingly, a prior patent does not solve a problem, such as appearance degradation of the pouch secondary battery due to excessive elongation of the corner portion (C), or a shorten pouch life due to weak portion occurrence because of the thin thickness of the corner portion.

Moreover, with respect to the lower pouch film (10b), when the punch member (12) pressurizes the pouch film (10b) from the top to the bottom to form the secondary battery accommodation portion, a tensile difference between the layers forming the pouch film is likely to occur. In addition, upon shape processing of the secondary battery accommodation portion in the pouch film, the elongation difference accumulated on the upper and lower surfaces of the pouch from the center of the pouch film to the edge portion may be clearly shown at the edge portion. As a result, as shown in Figure 3, in the conventional art, a curling phenomenon occurred in which the edge portion (21b2) of the pouch (21) was rounded upward.

This curling phenomenon caused difficulties in an edge sealing process or a folding process of the pouch film in the subsequent processes, or it was likely to cause defects in which the edge of the pouch film was folded, and was a factor of defect occurrence rate increase, and the like, due to sealing while the edge portion was folded, and the like.

Therefore, it is necessary to provide a pouch forming device and a pouch-type secondary battery manufacturing method that can prevent excessive stretching at the corner portion of the secondary battery accommodation portion in the pouch film of the conventional art, and reduce the curling phenomenon at the edge portion.

Meanwhile, as the pouch-type secondary batteries have various applied areas, high-efficiency and high-capacity secondary batteries are demanded. Accordingly, the thickness of the electrode assembly can be increased, and in this case, the forming depth of the pouch can be further increased. However, there is a limit to the possible forming depth relative to the area of the pouch. In addition, there is also a limit to further increase of the thickness of the pouch film.

Therefore, it is necessary to provide a secondary battery manufacturing method, and a secondary battery manufacturing device, which can effectively accommodate a thickness-increased electrode assembly with increased thickness while using an existing pouch film, and a secondary battery manufactured using the same.

### Disclosure

### Technical Problem

It is an object of the present invention to solve the problems of low durability and high defect rate of conventional pouch-type secondary batteries.

Through one example of the present invention, it can manufacture a compact pouch-type secondary battery without performing a separate drawing forming process for forming an accommodation portion of an electrode assembly in a pouch as the middle portion of a pouch film is folded so that both ends meet each other, and arranged to accommodate the electrode assembly, whereby it is intended to provide a pouch sealing device capable of solving the problems in which excessive stretching at corner portions of a secondary battery accommodation portion in the conventional art occurs to reduce durability, and a curling phenomenon in which the edge portion is rounded occurs.

Through one example of the present invention, it is intended to provide a pouch-type secondary battery, in which when a thickness of an electrode assembly is relatively large, pouch sealing can be effectively performed even though the drawing forming process is omitted or the depth is minimized, and a manufacturing method thereof and a manufacturing device thereof.

### Technical Solution

In order to achieve the above-described objects, according to one example of the present invention, a pouch-type secondary battery may be provided, which comprises: an electrode assembly in which an electrode lead is provided on at least one of one side surface and the other side surface; and a pouch arranged to surround the electrode assembly by folding a middle portion of a pouch film and thus covering the upper surface, lower surface, and back surface of the electrode assembly and provided with a sealing portion formed by heat-fusing border portions located on the front surface and both side surfaces of the electrode assembly, wherein the sealing portion comprises folding sealing portions located on one side surface and the other side surface of the electrode assembly, respectively, and heat-fused by folding a portion of the pouch film, and the folding sealing portions comprise a front folding sealing portion formed close to the front surface of the electrode assembly and a rear folding sealing portion formed close to the other side surface of the electrode assembly.

The electrode assembly is formed in a rectangular parallelepiped shape, which may have flat upper and lower surfaces, and may have four side surfaces, namely, a front surface, a back surface, one side surface, and the other side surface. The pouch sealing on both side surfaces, namely, one side surface and the other side surface, may be referred to as top sealing, and the pouch sealing on the front surface may be referred to as side sealing. Since the folding of the pouch is performed on the back surface, separate sealing may not be performed.

As one example, electrolyte injection, degassing, and final sealing may be performed on the front portion of the electrode assembly where the side sealing is performed.

Forming processing of the pouch for inserting the electrode assembly may be excluded.

By forming processing of the pouch for inserting the electrode assembly, a forming depth may be formed to be less than 0.5 times the thickness of the electrode assembly.

Regardless of the thickness of the electrode assembly, when the forming depth of the upper pouch film and the lower pouch film is 0.5 times the thickness of the electrode assembly, the top sealing may be performed in a state where the upper pouch film and the lower pouch film are horizontally overlapped. However, there is a limit to increasing the forming depth as the thickness of the electrode assembly increases. That is, the forming depth may be less than 0.5 times, and furthermore, the forming may also not be performed.

Therefore, it is important to form a state where the upper pouch film and the lower pouch film are horizontally overlapped by removing a gap between both pouch films upon top sealing.

To this end, a folding sealing portion and a general sealing portion may be formed in the top sealing. Particularly, the folding sealing portion may be formed at the front and rear, respectively. Then, the general sealing portion may be formed between the front folding sealing portion and the rear folding sealing portion.

The general sealing portion may mean one formed by heat-fusing the border portion of the pouch film (upper pouch film) covering the upper surface of the electrode assembly and the border portion of the pouch film (lower pouch film) covering the lower surface of the electrode assembly to each other.

The general sealing portion may be formed to be located on the front surface and both side surfaces (one side surface and the other side surface) of the electrode assembly.

It is preferable that the front folding sealing portion comprises an upper protrusion formed by folding the border portion of the pouch film covering the upper surface of the electrode assembly back and forth, and a lower protrusion formed by folding the border portion of the pouch film covering the lower surface of the electrode assembly back and forth.

It is preferable that the upper protrusion and the lower protrusion are located further forward than the electrode lead.

The general sealing portion may be formed to cross the electrode lead back and forth, and the front folding sealing portion may be formed in the front of the general sealing portion, and the rear folding sealing portion may be formed in the rear of the general sealing portion.

The general sealing portion may be formed in the front of the front folding sealing portion.

The front folding sealing portion may be bent to overlap with the general sealing portion vertically.

It is preferable that the rear folding sealing portion comprises a rear folding sealing portion that is folded so that a part of the folded middle portion of the pouch film overlaps and is heat-fused.

It is preferable that the rear folding sealing portion comprises a first branch portion formed between the border portion of the pouch film covering the back surface of the electrode assembly and the border portion of the pouch film covering the upper surface of the electrode assembly; and a second branch portion formed between the border portion of the pouch film covering the back surface of the electrode assembly and the border portion of the pouch film covering the lower surface of the electrode assembly.

It is preferable that the rear folding sealing portion is bent to overlap with the general sealing portion vertically.

In order to achieve the above-described objects, according to one example of the present invention, a method for manufacturing a pouch-type secondary battery by sealing an electrode assembly, in which an electrode lead is provided on at least one of one side surface and the other side surface, and a pouch film surrounding the electrode assembly may be provided, wherein the pouch-type secondary battery manufacturing method comprises a top sealing step of forming a sealing portion by heat-fusing border portions located on one side surface and the other side surface of the electrode assembly, respectively, in a state where the middle portion of the pouch film is folded to cover the upper surface, lower surface, and back surface of the electrode assembly, and the sealing portion comprises a folding sealing portion in which a part of the pouch film is folded and heat-fused, and the folding sealing portion comprises a front folding sealing portion formed close to the front surface of the electrode assembly and a rear folding sealing portion formed close to the other side surface of the electrode assembly.

The manufacturing method may comprise a side sealing step of forming a sealing portion by heat-fusing border portions located on the front surfaces of the electrode assembly, respectively.

The side sealing step may comprise primary side sealing performed before a degassing process and secondary side sealing performed after the degassing process is completed.

The top sealing step may be performed before the side sealing step.

The top sealing step may comprise a heating step of heating a plurality of sealing blocks through a heating part; a moving step of moving the plurality of sealing blocks to a pressurizing position of the pouch film in a heated state through a block moving part; and a pressurizing step of pressurizing the pouch film by the plurality of sealing blocks to form the sealing portion.

In order to achieve the above-described objects, according to one example of the present invention, it may provide a pouch-type secondary battery comprising: an electrode assembly in which an electrode lead is provided on at least one of one side surface and the other side surface; and a pouch arranged to surround the electrode assembly by folding a middle portion of the pouch film so that a front end and a rear end meet each other, and provided with a sealing portion formed by heat-fusing a border portion, wherein the sealing portion comprises a folding sealing portion that is folded so that a portion of the pouch film overlaps and is heat-fused.

The pouch may be divided into an accommodation region where the electrode assembly is accommodated, and a degassing region being communicated with the accommodation region and for temporarily accommodating gas generated in an activation process, and the folding sealing portion may comprise a front folding sealing portion formed between the accommodation region and the degassing region.

The front folding sealing portion may comprise an upper protrusion in a folded form so that a portion of the upper portion of the folded pouch film overlaps; and a lower protrusion in a folded form so that a portion of the lower portion of the folded pouch film overlaps.

The sealing portion may be provided with a general sealing portion formed by heat-fusing both ends of the pouch film, and each of the upper protrusion and the lower protrusion may be bent to overlap with the general sealing portion.

The folding sealing portion may comprise a rear folding sealing portion that is folded so that a part of the folded middle portion of the pouch film overlaps and is heat-fused.

The rear folding sealing portion may be provided with a first branch portion and a second branch portion, each of which is folded so that a portion of the middle portion of the pouch film overlaps and has a form of being divided into both branches from one.

The first branch portion and the second branch portion may be bent to overlap with each other.

The pouch may comprise a side sealing portion formed by heat fusion and formed on a side of the electrode assembly where the electrode lead is not positioned.

In order to achieve the above-described objects, according to one example of the present invention, it provides a sealing device for a pouch-type secondary battery for sealing a pouch arranged to surround an electrode assembly in which an electrode lead is provided by folding a middle portion so that both ends of the pouch film meet each other, wherein the secondary battery sealing device comprises: a heating part arranged to generate heat for sealing the pouch; a plurality of sealing blocks connected to the heating part to conduct heat, and arranged to form a sealing portion provided with a folding sealing portion that is folded so that an electrode lead is interposed between the upper and lower portions of the folded pouch film, and a portion of the folded pouch film overlaps and is heat-fused; and a block moving part moving the plurality of sealing blocks to pressurize sealing regions of the pouch in a state where the plurality of sealing blocks is heated.

The pouch may be divided into an accommodation region where the electrode assembly is accommodated, and a degassing region being communicated with the accommodation region and for temporarily accommodating gas generated in an activation process, and the plurality of sealing blocks may comprise: a sealing block at one side arranged to pressurize a folded middle portion of the pouch film in the sealing region; a middle sealing block provided to pressurize a portion corresponding to the accommodation region in the sealing region; and a sealing block at the other side arranged to pressurize a portion corresponding to the degassing region in the sealing region.

The middle sealing block may comprise a middle-upper block arranged to pressurize the upper portion of the folded pouch film in a downward direction; and a middle-lower block arranged to pressurize the lower portion of the folded pouch film in an upward direction.

The sealing block at one side may be arranged to form a rear folding sealing portion folded by pressurizing the folded middle portion of the pouch film so that a part of the middle portion overlaps.

The middle sealing block may be arranged to support the folded middle portion of the pouch film in a direction opposite to the pressurizing direction of the sealing block at one side, to form the rear folding sealing portion.

The rear folding sealing portion may comprise a first branch portion and a second branch portion having a form branched from one, and each of the middle sealing block and the sealing block at one side may comprise an inclined surface and a curved surface for pressurizing a folded middle portion of the pouch film to form the first branch portion and the second branch portion.

The middle sealing block and the sealing block at the other side may be arranged to form a front folding sealing portion in a form folded so that a portion of the pouch film overlaps by pressurizing a portion between the accommodation region for accommodating the electrode assembly and the degassing region.

The sealing block at the other side may be arranged to pressurize a portion between the accommodation region for accommodating the electrode assembly and the degassing region in a diagonal direction, to form the front folding sealing portion, and the middle sealing block may be arranged to support a portion between the accommodation region for accommodating the electrode assembly and the degassing region in a direction opposite to the pressurizing direction of the sealing block at the other side.

The sealing block at the other side may comprise an upper block at the other side arranged to form an upper protrusion in a form folded so that a portion overlaps by pressurizing a portion between the accommodation region and the degassing region together with the middle-upper block; and a lower block at the other side arranged to form a lower protrusion in a form folded so that a portion overlaps by pressurizing a portion between the accommodation region and the degassing region together with the middle-lower block.

The upper block at the other side and the lower block at the other side may be arranged to form a general sealing portion by pressurizing the portions toward both ends of the pouch film.

The secondary battery sealing device of the present invention may further comprise a plurality of bending blocks arranged so that each of the upper protrusion and the lower protrusion is bent to overlap with the general sealing portion; and a bending moving part arranged to transfer the plurality of bending blocks.

The secondary battery sealing device of the present invention may further comprise a plurality of side sealing blocks connected to the heating part to conduct heat and arranged to form a side sealing portion by pressurizing a portion of the pouch corresponding to a side of the electrode assembly where the electrode lead is not positioned by the block moving part in a heated state.

In order to achieve the above-described objects, according to one example of the present invention, it provides a method of sealing a pouch-type secondary battery using a secondary battery sealing device comprising a heating part, a plurality of sealing blocks, and a block moving part, to seal a pouch arranged to surround an electrode assembly in which an electrode lead is provided by folding a middle portion of a pouch film so that both ends meet each other, wherein the sealing method comprises: a heating step in which the heating part heats the plurality of sealing blocks; a moving step in which the block moving part moves the plurality of sealing blocks so that the plurality of sealing blocks pressurizes a sealing region of the pouch in a heated state; and a pressurizing step of pressurizing the border portion of the pouch in a state where the plurality of sealing blocks is heated, to be sealed, but to form a sealing portion provided with a folding sealing portion that is folded so that the electrode lead is interposed between the upper and lower portions of the folded pouch film, and is heat-fused.

### Advantageous Effects

Through one example of the present invention, to improve the problems of the conventional art, it can manufacture a compact pouch-type secondary battery without performing a separate drawing forming process for forming an accommodation portion of an electrode assembly in a pouch as the middle portion of a pouch film is folded so that both ends meet each other, and arranged to surround the electrode assembly, whereby it is possible to provide a pouch sealing device capable of solving the problems in which excessive stretching at corner portions of a secondary battery accommodation portion in the conventional art occurs to reduce durability, and a curling phenomenon in which the edge portion is rounded occurs.

Through one example of the present invention, it is possible to provide a pouch-type secondary battery, in which when a thickness of an electrode assembly is relatively large, pouch sealing can be effectively performed even though the drawing forming process is omitted or the depth is minimized, and a manufacturing method thereof and a manufacturing device thereof.

### Description of Drawings

Figure 1 is an exploded perspective diagram schematically showing an appearance of constitutions of a typical pouch-type secondary battery.
Figure 2 is a cross-sectional diagram schematically showing an appearance that a sealing portion is formed in a pouch-type secondary battery using a pouch sealing device of a conventional art.
Figure 3 is a cross-sectional diagram schematically showing an appearance that a sealing portion has been formed in a pouch-type secondary battery using a pouch sealing device of a conventional art.
Figure 4 is a perspective diagram schematically showing an appearance of a pouch-type secondary battery before a sealing process, according to one example of the present invention.
Figure 5 is a side view schematically showing an appearance of a pouch-type secondary battery after a sealing process, according to one example of the present invention.
Figure 6 is a conceptual diagram showing constitutions of a pouch sealing device according to one example of the present invention.
Figures 7 to 9 are side views schematically showing appearances that a sealing portion of a pouch-type secondary battery is formed using a pouch sealing device according to one example of the present invention.
Figures 10 and 11 are side views schematically showing appearances that a sealing portion of a pouch-type secondary battery is formed using a pouch sealing device according to one example of the present invention.
Figure 12 is a cross-sectional diagram schematically showing an appearance that a side sealing portion of a pouch-type secondary battery is formed using a pouch sealing device according to one example of the present invention.
Figure 13 is a flow chart showing a method of sealing a pouch-type secondary battery according to one example of the present invention.

### Best Mode

Hereinafter, a pouch-type secondary battery, a pouch sealing device, and a sealing method, according to one example of the present invention will be described in detail with reference to the attached drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

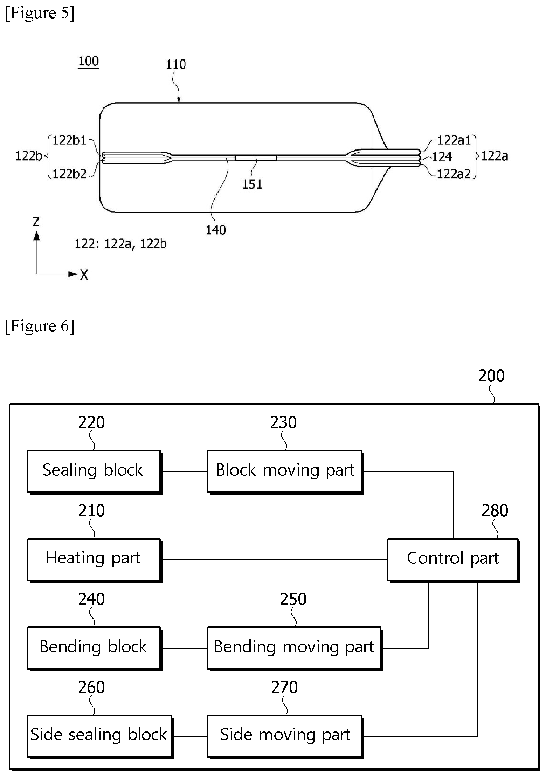

Figure 4 is a perspective diagram schematically showing an appearance of a pouch-type secondary battery (100) before a sealing process, according to one example of the present invention. Then, Figure 5 is a side view schematically showing an appearance of a pouch-type secondary battery (100) after a sealing process, according to one example of the present invention.

Referring to Figures 4 and 5, a pouch-type secondary battery (100) according to one example of the present invention comprises an electrode assembly (120). An electrode lead (151) is provided on at least one of one side and the other side of the electrode assembly (120). For example, as in Figure 4, an electrode lead (151) may be provided on each of one side and the other side of the electrode assembly (120) in the Y-axis direction.

In addition, the pouch-type secondary battery (100) of the present invention comprises a pouch (110). The pouch (110) may be folded by the middle portion (M) of the pouch film (111) such that both ends in the X-axis direction meet each other. The pouch (110) may be arranged such that the electrode assembly (120) is accommodated in a space separated between the upper portion (111a) and the lower portion (111b) of the pouch film (111) thus folded. The pouch (110) is provided with a sealing portion (140) formed by heat-fusing a border portion. In this instance, a separate structure for accommodating the electrode assembly (120) has not been formed in the pouch (110) through shape processing such as stretching. That is, in the pouch (110), the border portion may be sealed in a form in which the middle portion (M) of the sheet-shaped pouch film (111) is folded.

Therefore, the pouch-type secondary battery (100) of the present invention is arranged to surround an electrode assembly (120) by folding a middle portion (M) of a pouch film (111) so that both ends meet each other, thereby not performing a separate drawing forming process for forming an accommodation portion of the electrode assembly (120) in a pouch (110), whereby it is possible to solve the problems in which excessive stretching occurs in the corner portion (portion C of Figure 3) of the secondary battery accommodation portion in the conventional art, thereby reducing durability, and a curling phenomenon, in which the edge portion is bent, occurs.

Specifically, the sealing portion (140) may be formed by heat-fusing the border portion of the upper portion (111a) and the border portion of the lower portion (111b) of the pouch film (111) in which the middle portion (M) is folded. The sealing portion (140) may comprise at least one of a sealing portion (140) at one side and a sealing portion (140) at the other side, in which an electrode lead (151) is interposed between the upper portion (111a) and the lower portion (111b) of the folded pouch film (111). For example, when an electrode lead (151) is provided on each of one side and the other side of the secondary battery (100), the sealing portion (140) may comprise a sealing portion (140) at one side and a sealing portion (140) at the other side, in which an electrode lead (151) is interposed between the upper portion (111a) and the lower portion (111b) of the folded pouch film (111).

Such a sealing portion (140) may comprise a folding sealing portion (122). The folding sealing portion (122) may have a form folded such that a portion of the upper portion (111a) or the lower portion (111b) of the folded pouch film (111) overlaps. The folding sealing portion (122) may be provided on at least one of the sealing portion (140) at one side and the sealing portion (140) at the other side, in which the electrode lead (151) is interposed between the upper and lower portions of the folded pouch film (111).

Therefore, by providing the folding sealing portion (122) on at least one of the sealing portion (140) at one side and the sealing portion (140) at the other side, the sealing portion (140) of the pouch-type secondary battery (100) of the present invention can effectively reduce the empty space on one side and the other side of the electrode assembly (120), where the internal components of the pouch-type secondary battery (100) are not filled. Accordingly, the pouch-type secondary battery (100) of the present invention can have a more compact form, thereby effectively increasing the energy density of the secondary battery.

Also, the pouch (110) may comprise an accommodation region (P) where an accommodating space in which an electrode assembly (120) is accommodated is formed. The pouch (110) may comprise a degassing region (U). The degassing region (U) may temporarily become a passage for discharging gas generated from the accommodation region (P). That is, the degassing region (U) may have a temporary accommodating space for temporarily accommodating gas generated in the activation process of the secondary battery. That is, the pouch (110) may be largely divided into an accommodation region (P) and a degassing region (U).

In addition, the folding sealing portion (122) may comprise a front folding sealing portion (122a). The front folding sealing portion (122a) may be formed between a portion corresponding to the accommodation region (P) and a portion corresponding to the degassing region (U) in the sealing portion (140). That is, the front folding sealing portion (122a) may be provided at a boundary between the space where the electrode assembly (120) is accommodated and the temporary accommodating space for accommodating the generated gas in the pouch (110). Therefore, the pouch-type secondary battery (100) of the present invention may minimize an empty space that may be generated in the accommodating space of the electrode assembly (120) by forming such a front folding sealing portion (122a).

Specifically, the front folding sealing portion (122a) may comprise an upper protrusion (122a1) and a lower protrusion (122a2). The upper protrusion (122a1) may have a form folded so that a part of the upper portion (111a) of the folded pouch film (111) overlaps. The lower protrusion (122a2) may have a form folded so that a part of the lower portion (111b) of the folded pouch film (111) overlaps. Such a pouch-type secondary battery (100) of the present invention can minimize the empty space where the electrode assembly (120) and the electrolyte are not filled in the internal space of the pouch (110) by forming the upper protrusion (122a1) and the lower protrusion (122a2).

Also, each of the sealing portion (140) at one side and the sealing portion (140) at the other side may have a general sealing portion (124). The general sealing portion (124) may be a sealing portion (140) formed by heat-fusing both ends of the pouch film (111) to each other. For example, the pouch (110) may be provided with a general sealing portion (124) in which both ends of the pouch film (111) in the folding direction (positive direction of the X-axis) are heat-fused to each other on each of the sealing portion (140) at one side and the sealing portion (140) at the other side. Each of the upper protrusion (122a1) and the lower protrusion (122a2) may have a form bent to overlap with the general sealing portion (124). That is, the upper protrusion (122a1) bent in the horizontal direction may be located at the upper portion of the general sealing portion (124), and the lower protrusion (122a2) bent in the horizontal direction may be located at the lower portion (111b) of the general sealing portion (124). Therefore, as the pouch-type secondary battery (100) of the present invention is provided with the upper protrusion (122a1) and the lower protrusion (122a2) bent to overlap with the general sealing portion (124), it can become a more compact pouch-type secondary battery (100), whereby it is possible to manufacture a battery pack with a high energy density. In addition, when a plurality of pouch-type secondary batteries (100) of the present invention is laminated in the vertical direction, a larger space can be secured on one side and the other side of the laminated pouch-type secondary batteries (100), so that there is an advantage that heat dissipation properties of the battery pack can be increased.

In addition, the folding sealing portion (122) may comprise a rear folding sealing portion (122b) formed on the folded middle portion (M) of the pouch film (111). That is, the rear folding sealing portion (122b) may be provided on the folded portion of the pouch film (111). Furthermore, the rear folding sealing portion (122b) may comprise a first branch portion (122b1) and a second branch portion (122b2). The first branch portion (122b1) and the second branch portion (122b2) may have a form divided into two branches from one. Each of the first branch portion (122b1) and the second branch portion (122b2) may be formed by heat-fusing a part of the middle portion (M) of the pouch film (111) in a state of being folded to overlap.

Furthermore, the first branch portion (122b1) and the second branch portion (122b2) may have a form bend to overlap with each other. For example, as in Figure 5, the first branch portion (122b1) and the second branch portion (122b2) may have a form bent in the opposite direction of the folding direction (negative direction of the X-axis). Therefore, the pouch-type secondary battery (100) of the present invention has a form bent to overlap with each other, it can become a more compact pouch-type secondary battery (100), whereby it is possible to manufacture a battery pack with a high energy density. In addition, when a plurality of pouch-type secondary batteries (100) of the present invention is laminated in a vertical direction, a larger space can be secured on one side and the other side of the laminated pouch-type secondary batteries (100), so that there is an advantage that heat dissipation properties of the battery pack can be increased.

In addition, the pouch (110) may comprise a side sealing portion (126). The side sealing portion (126) may be formed by heat fusion. The side sealing portion (126) may be formed on a side of the electrode assembly (120) where the electrode lead (151) is not positioned. For example, as in Figure 4, the pouch (110) may be provided with the side sealing portion (126) at a terminal in the positive direction of the X-axis of the pouch film (111).

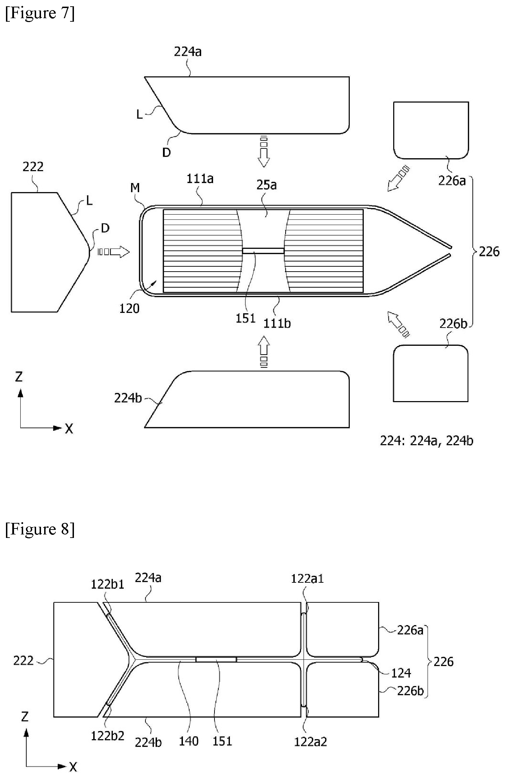

Figure 6 is a conceptual diagram showing constitutions of a pouch sealing device (200) according to one example of the present invention. Then, Figures 7 to 9 are side views schematically showing appearances that a sealing portion (140) of a pouch-type secondary battery is formed using a pouch sealing device (200) according to one example of the present invention.

Referring to Figures 6 to 9, the present application provides a secondary battery sealing device (200). The secondary battery sealing device (200) of the present invention may be a device for sealing a pouch (110) arranged to surround an electrode assembly (120), in which an electrode lead (151) is provided, by folding a middle portion (M) so that both ends of the pouch film (111) meet each other.

Also, the secondary battery sealing device (200) of the present invention comprises a heating part (210). The heating part (210) is arranged to generate heat for sealing the pouch (110). For example, the heating part (210) may be provided with a plurality of heating units (not shown) each having a built-in heater to be able to heat a plurality of blocks. That is, the heating part (210) may generate heat so that a plurality of sealing blocks (220) to be described below may heat to a heat-fusing temperature of the pouch film (111). For example, the heat-fusing temperature of the pouch (110) may be 120°C to 250°C.

In addition, the secondary battery sealing device (200) of the present invention may further comprise a control part (280). The control part (280) may control operation of the heating part (210) so that the sealing block (220) may heat to the heat-fusing temperature of the pouch film (111).

Furthermore, the secondary battery sealing device (200) of the present invention comprises a plurality of sealing blocks (220). The plurality of sealing blocks (220) may be directly connected to the heating part (210) to conduct heat. That is, one surface of the heating part (210) and one surface of the plurality of sealing blocks (220) may be arranged to be in contact with each other. The plurality of sealing blocks (220) may form at least one of a sealing portion (140) at one side and a sealing portion (140) at the other side, in which an electrode lead (151) is interposed between the upper portion (111a) and the lower portion (111b) of the folded pouch film (111). In addition, at least one of the sealing portion (140) at one side and the sealing portion (140) at the other side may be provided with a folding sealing portion (122). The folding sealing portion (122) may have a form folded such that a portion of the upper portion (111a) or the lower portion (111b) of the pouch film (111) overlaps.

In addition, the secondary battery sealing device (200) of the present invention may comprise a block moving part (230). The block moving part (230) moves the plurality of sealing blocks (220) so that the plurality of sealing blocks (220) pressurizes the sealing region of the pouch (110) in a heated state. For example, the block moving part (230) may be provided with a plurality of sealing moving units to move each of the plurality of sealing blocks (220). For example, the sealing moving unit may be a servo cylinder (not shown) provided with a servo motor. The control part (280) may control the operation of the block moving part (230) so that the sealing blocks (220) may pressurize the pouch film (111).

Therefore, as at least one of the sealing portion (140) at one side and the sealing portion (140) at the other side in the sealing portion (140) of the pouch-type secondary battery (100) is provided with the folding sealing portion (122), the secondary battery sealing device (200) according to one example of the present invention may manufacture a pouch-type secondary battery (100), in which the empty space on one side and the other side of the electrode assembly (120) where the internal components are not filled is effectively reduced. Accordingly, the secondary battery sealing device (200) of the present invention can manufacture a pouch-type secondary battery (100) having a more compact form and effectively increasing the energy density.

In addition, the pouch (110) may be divided into an accommodation region (P) in which the electrode assembly (120) is accommodated and a degassing region (U) in communication therewith for temporarily accommodating gas generated in the activation process.

Specifically, the plurality of sealing blocks (220) may comprise a sealing block (222) at one side. The sealing block (222) at one side may be arranged to pressurize the folded middle portion (M) of the pouch film (111) in the sealing region (the border portion of the pouch film (111)) of the pouch (110).

In addition, the plurality of sealing blocks (220) may comprise a middle sealing block (224). The middle sealing block (224) may be arranged to pressurize a portion corresponding to the accommodation region (P) in the sealing region. Furthermore, the plurality of sealing blocks (220) may comprise a sealing block (226) at the other side. The sealing block (226) at the other side may be arranged to pressurize a portion corresponding to the degassing region (U) in the sealing region of the pouch (110).

More specifically, the middle sealing block (224) may comprise a middle-upper block (224a) and a middle-lower block (224b). The middle-upper block (224a) may be arranged to pressurize the upper portion (111a) of the folded pouch film (111) in a downward direction. The middle-lower block (224b) may be arranged to pressurize the lower portion (111b) of the folded pouch film (111) in an upward direction.

Also, the sealing block (222) at one side may be arranged to form a rear folding sealing portion (122b) folded so that a part of the middle portion (M) of the pouch film (111) overlaps together with the middle sealing block (224). The sealing block (222) at one side may be arranged to pressurize the folded middle portion (M) of the pouch film (111) in the folding direction (positive direction of the X-axis). At this time, as in Figure 8, the middle sealing block (224) may be arranged to support the folded middle portion (M) of the pouch film (111) in a direction opposite to the pressurizing direction of the sealing block (222) at one side, to form the rear folding sealing portion (122b).

In addition, the rear folding sealing portion (122b) may comprise a first branch portion (122b1) and a second branch portion (122b2) having a form branched from one. Each of the middle sealing block (224) and the sealing block (222) at one side may comprise an inclined surface (L) and a curved surface (D), which pressurize the folded middle portion (M) of the pouch film (111) to form the first branch portion (122b1) and the second branch portion (122b2). For example, as in Figure 7, the sealing block (222) at one side may have a curved surface (D) formed in a portion corresponding to the middle portion (M) of the pouch film (111), and inclined surfaces (L) formed on upper and lower sides of the curved surface (D). The middle-upper block (224a) of the middle sealing block (224) may have a curved surface (D) formed in a portion corresponding to the middle portion (M) of the pouch film (111), and an inclined surface (L) formed on an upper side of the curved surface (D). The middle-lower block (224b) may have a curved surface (D) formed in a portion corresponding to the middle portion (M) of the pouch film (111), and an inclined surface (L) formed on a lower side of the curved surface (D). Therefore, by forming a curved surface (D) and an inclined surface (L) on each of the middle sealing block (224) and the sealing block (222) at one side, the first branch portion (122b1) and the second branch portion (122b2) may be effectively formed.

Furthermore, the middle sealing block (224) and the sealing block (226) at the other side may be arranged to form a front folding sealing portion (122a) in a form folded so that a portion of the pouch film (111) overlaps. To this end, the middle sealing block (224) and the sealing block (226) at the other side may be arranged to pressurize a portion between the accommodation region (P) accommodating the electrode assembly (120) and the degassing region (U). At this time, the sealing block (226) at the other side may pressurize a portion between the region accommodating the electrode assembly (120) and the degassing region (U) in a diagonal direction, to form a front folding sealing portion (122a). At this time, the middle sealing block (224) may be arranged to support a portion between the accommodation region (P) accommodating the electrode assembly (120) and the degassing region (U) in a direction opposite to the pressurizing direction of the sealing block (226) at the other side.

Also, the sealing block (226) at the other side may comprise an upper block (226a) at the other side. The sealing block (226) at the other side may be arranged to form an upper protrusion (122a1) in a form folded so that a portion of the upper portion (111a) of the pouch film (111) overlaps. To this end, the upper block (226a) at the other side may pressurize a portion between the accommodation region (P) and the degassing region (U) together with the middle-upper block (224a). At this time, the upper block (226a) at the other side may pressurize in a downwardly inclined diagonal direction so that a portion of the upper portion of the folded pouch film (111) is folded in an overlapped form.

In addition, the sealing block (226) at the other side may comprise a lower block (226b) at the other side. The sealing block (226) at the other side may be arranged to form a lower protrusion (122a2) in a form folded so that a part of the lower portion (111b) of the pouch film (111) overlaps. To this end, the lower block (226b) at the other side may pressurize a portion between the accommodation region (P) and the degassing region (U) together with the middle-lower block (224b). At this time, the lower block (226b) at the other side may pressurize in an upwardly inclined diagonal direction so that a part of the lower portion (111b) of the folded pouch film (111) is folded in an overlapped form.

Furthermore, the upper block (226a) at the other side and the lower block (226b) at the other side may be arranged to form a general sealing portion (124) by pressurizing the pouch film (111) toward both ends. That is, the upper block (226a) at the other side pressurizes both ends of the pouch film (111) downward, and the lower block (226b) at the other side pressurizes both ends of the pouch film (111) upward, whereby it is possible to form a general sealing portion (124).

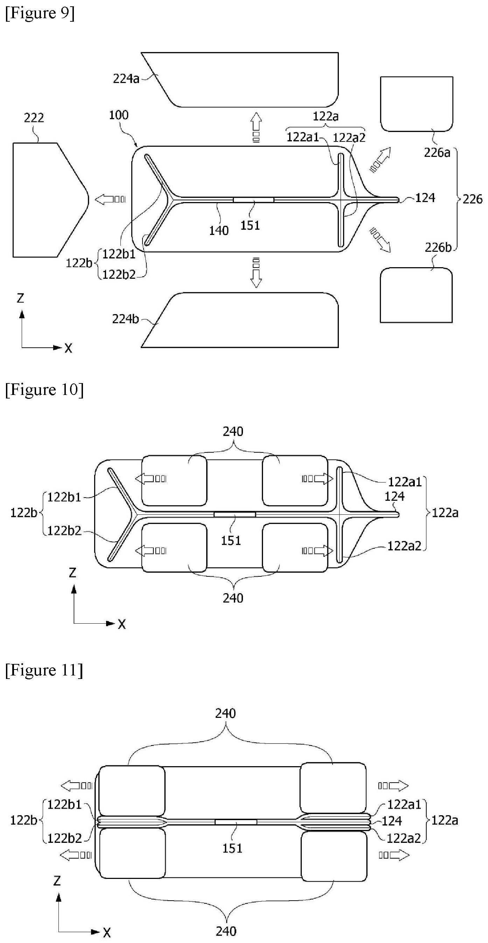

Figures 10 and 11 are side views schematically appearances that a sealing portion (140) of a pouch-type secondary battery (100) is formed using a pouch sealing device (200) according to one example of the present invention.

Referring to Figures 10 and 11, the secondary battery sealing device (200) of the present invention may further comprise a plurality of bending blocks (240). The bending blocks (240) may be arranged such that each of the upper protrusion (122a1) and the lower protrusion (122a2) is bent to overlap with the general sealing portion (124). At this time, the bending block (240) may be in a heated state so that the folding sealing portion (122) may be thermally deformed when the folding sealing portion (122) is pressurized. To this end, the bending block (240) may be provided with a separate heating member (not shown) such as a heater. The plurality of bending blocks (240) may comprise an upper bending block (240) and a lower bending block (240). The bending block (240) located relatively higher may pressurize the upper protrusion (122a1) in the positive direction of the X-axis. The bending block (240) located relatively lower may pressurize the lower protrusion (122a2) in the positive direction of the X-axis.

In addition, the secondary battery sealing device (200) of the present invention may further comprise a bending moving part (250) arranged to move the plurality of bending blocks (240). For example, the bending moving part (250) may be provided with a plurality of bending moving units (not shown) arranged to move each of the plurality of bending blocks (240). The bending moving unit may be, for example, a servo cylinder provided with a servo motor. The control part (280) may control operation of the bending moving part (250) so that the bending block (240) may pressurize the folding sealing portion (122).

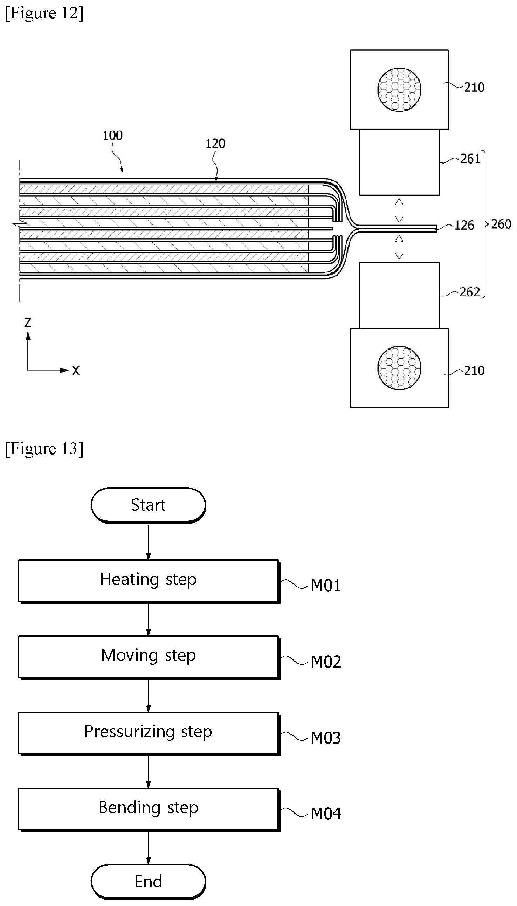

Figure 12 is a cross-sectional diagram schematically showing an appearance that a side sealing portion (126) of a pouch-type secondary battery (100) is formed using a pouch sealing device (200) according to one example of the present invention.

Referring to Figure 12, the pouch sealing device (200) of the present invention may comprise a plurality of side sealing blocks (260) arranged to form the side sealing portion (126). For example, a plurality of side sealing blocks (260) may be connected to the heating part (210) to conduct heat. The plurality of side sealing blocks (260) may pressurize a portion of the pouch (110) corresponding to a side of the electrode assembly (120) where the electrode lead (151) is not positioned in a heated state by the block moving part (230).

For example, as in Figure 12, the plurality of side sealing blocks (260) may comprise a side upper block (261) and a side lower block (262). The side upper block pressurizes both ends of the pouch film (111) in a downward direction in a heated state, and the side lower block pressurizes both ends of the pouch film (111) in an upward direction in a heated state, whereby it is possible to form the side sealing portion (126). To this end, the pouch sealing device (200) of the present invention may further comprise a side moving part (270) arranged to move each of the side upper block and the side lower block up and down. For example, the side moving part (270) may comprise a plurality of side moving units. The side moving unit may be, for example, a servo cylinder provided with a servo motor. The control part (280) may control operation of the side moving part (270) so that the side sealing block (260) may pressurize both ends of the pouch film (111).

Figure 13 is a flow chart showing a method of sealing a pouch-type secondary battery (100) according to one example of the present invention.

According to the present example, it provides a method for manufacturing a pouch-type secondary battery, and particularly, it provides a method of sealing a pouch.

The pouch sealing step may comprise a top sealing step and a side sealing step, and may comprise a step of pre-assembling a pouch and an electrode assembly before performing such a sealing step.

As one example, when a cup accommodation portion or forming portion into which an electrode assembly is inserted is formed in a pouch film, a step of inserting an electrode assembly into the forming portion may be included. When the forming portion is not formed, the pouch film may be folded to cover the lower surface, the back surface, and the upper surface of the electrode assembly. The folding may be performed at the back surface position of the electrode assembly.

Here, the sealing performed on one side surface and the other side surface of the electrode assembly, that is, on both side surfaces, may be referred to as a top sealing step, and the sealing performed on the front surface of the electrode assembly may be referred to as a side sealing step.

According to one example of the present invention, particularly, a top sealing step performed when a forming process is omitted and the thickness of the electrode assembly is relatively large, and a manufacturing method comprising the same may be provided.

Referring to Figure 13 together with Figures 6 to 12 again, the sealing method according to one example of the present invention is a method of sealing a pouch (110) arranged to surround an electrode assembly (120) in which an electrode lead (151) is provided by folding a middle portion (M) of a pouch film (111) so that both ends meet each other. The sealing method of the present invention is a method of sealing a pouch-type secondary battery (100) using a secondary battery sealing device (200) comprising a heating part (210), a plurality of sealing blocks (220), and a block moving part (230).

Specifically, the sealing method of the present invention comprises a heating step (M01). In the heating step (M01), the heating part (210) heats the plurality of sealing blocks (220) to a temperature capable of heat-fusion when the plurality of sealing blocks (220) pressurizes the sealing region of the pouch (110).

Also, the sealing method of the present invention comprises a moving step (M02). The moving step (M02) is a step in which the block moving part (230) moves the plurality of sealing blocks (220) so that the plurality of sealing blocks (220) pressurizes the sealing region of the pouch (110) in a heated state.

In addition, the sealing method of the present invention comprises a pressurizing step (M02). The pressurizing step (M02) is a step in which the plurality of sealing blocks (220) pressurizes the border portion of the pouch (110) to be sealed, but forms at least one of the sealing portion (140) at one side and the sealing portion (140) at the other side in which the electrode lead (151) is interposed between the upper portion (111a) and the lower portion (111b) of the folded pouch film (111). In the pressurizing step (M02), the pouch film (111) may be sealed so that at least one of a sealing portion (140) at one side and a sealing portion (140) at the other side is provided with a folding sealing portion (122) having a form folded so that a part of the upper portion (111a) or the lower portion (111b) of the pouch film (111) overlaps in a state where the plurality of sealing blocks (220) is heated.

Therefore, as at least one of the sealing portion (140) at one side and the sealing portion (140) at the other side is provided with a folding sealing portion (122), the sealing method of the present invention can provide a pouch-type secondary battery (100) that the empty space on one side and the other side of the electrode assembly (120) where the internal components are not filled can be effectively reduced. Accordingly, the pouch-type secondary battery (100) manufactured by the sealing method of the present invention can have a more compact shape, thereby effectively increasing the energy density of the secondary battery.

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

It is described in the Detailed Description of Invention.

## Claims

1. A pouch-type secondary battery, comprising:
an electrode assembly in which an electrode lead is provided on at least one of one side surface and the other side surface; and
a pouch arranged to surround the electrode assembly by folding a middle portion of a pouch film and thus covering the upper surface, lower surface, and back surface of the electrode assembly and provided with a sealing portion formed by heat-fusing border portions located on the front surface and both side surfaces of the electrode assembly, wherein
the sealing portion comprises folding sealing portions located on one side surface and the other side surface of the electrode assembly, respectively, and heat-fused by folding a portion of the pouch film, and
the folding sealing portions comprise a front folding sealing portion formed close to the front surface of the electrode assembly and a rear folding sealing portion formed close to the other side surface of the electrode assembly.

2. The pouch-type secondary battery according to claim 1, **characterized in that**
forming processing of the pouch for inserting the electrode assembly is excluded.

3. The pouch-type secondary battery according to claim 1, **characterized in that**
by forming processing of the pouch for inserting the electrode assembly, a forming depth is formed to be less than 0.5 times the thickness of the electrode assembly.

4. The pouch-type secondary battery according to claim 1, **characterized in that**
the sealing portion comprises a general sealing portion formed by heat-fusing the border portion of the pouch film covering the upper surface of the electrode assembly and the border portion of the pouch film covering the lower surface of the electrode assembly to each other.

5. The pouch-type secondary battery according to claim 4, **characterized in that**
the general sealing portion is formed to be located on the front surface and both side surfaces of the electrode assembly.

6. The pouch-type secondary battery according to claim 5, **characterized in that**
the front folding sealing portion comprises
an upper protrusion formed by folding the border portion of the pouch film covering the upper surface of the electrode assembly back and forth, and a lower protrusion formed by folding the border portion of the pouch film covering the lower surface of the electrode assembly back and forth.

7. The pouch-type secondary battery according to claim 6, **characterized in that**
the upper protrusion and the lower protrusion are located further forward than the electrode lead.

8. The pouch-type secondary battery according to claim 7, **characterized in that**
the general sealing portion is formed to cross the electrode lead back and forth, and the front folding sealing portion is formed in the front of the general sealing portion, and the rear folding sealing portion is formed in the rear of the general sealing portion.

9. The pouch-type secondary battery according to claim 8, **characterized in that**
the general sealing portion is formed in the front of the front folding sealing portion.

10. The pouch-type secondary battery according to claim 9, **characterized in that**
the front folding sealing portion is bent to overlap with the general sealing portion vertically.

11. The pouch-type secondary battery according to claim 5, **characterized in that**
the rear folding sealing portion comprises
a rear folding sealing portion that is folded so that a part of the folded middle portion of the pouch film overlaps and is heat-fused.

12. The pouch-type secondary battery according to claim 5, **characterized in that**
the rear folding sealing portion comprises:
a first branch portion formed between the border portion of the pouch film covering the back surface of the electrode assembly and the border portion of the pouch film covering the upper surface of the electrode assembly; and
a second branch portion formed between the border portion of the pouch film covering the back surface of the electrode assembly and the border portion of the pouch film covering the lower surface of the electrode assembly.

13. The pouch-type secondary battery according to claim 12, **characterized in that**
the rear folding sealing portion is bent to overlap with the general sealing portion vertically.

14. A method for manufacturing a pouch-type secondary battery by sealing an electrode assembly, in which an electrode lead is provided on at least one of one side surface and the other side surface, and a pouch film surrounding the electrode assembly, wherein the pouch-type secondary battery manufacturing method comprises
a top sealing step of forming a sealing portion by heat-fusing border portions located on one side surface and the other side surface of the electrode assembly, respectively, in a state where the middle portion of the pouch film is folded to cover the upper surface, lower surface, and back surface of the electrode assembly, and
the sealing portion comprises a folding sealing portion in which a part of the pouch film is folded and heat-fused, and
the folding sealing portion comprises a front folding sealing portion formed close to the front surface of the electrode assembly and a rear folding sealing portion formed close to the other side surface of the electrode assembly.

15. The pouch-type secondary battery manufacturing method according to claim 14, **characterized in that**
the top sealing step comprises:
a heating step of heating a plurality of sealing blocks through a heating part;
a moving step of moving the plurality of sealing blocks to a pressurizing position of the pouch film in a heated state through a block moving part; and
a pressurizing step of pressurizing the pouch film by the plurality of sealing blocks to form the sealing portion.
